# EUROPEAN PATENT APPLICATION

(11) **EP 3 581 466 A1**
(43) Date of publication of application: **18.12.2019**
(21) Application number: 18750789.2
(22) Date of filing: 12.01.2018
(51) Int. Cl.: B62D 7/16, B62D 17/00

(54) **TIE ROD OF AUTOMOTIVE STEERING DEVICE**

(30) Priority: 07.02.2017 KR 20170016996
(71) Applicant: Central Corporation, Changwon-si, Gyeongsangnam-do 51557 (KR)
(72) Inventor: SEO, Sun Min, Changwon-si Gyeongsangnam-do 51445 (KR)
(74) Representative: Habermann, Hruschka & Schnabel
(86) International application number: PCT/KR2018/000609
(87) International publication number: WO 2018/147561

(57) **Abstract**

The purpose of the present invention is to provide a tie rod of automotive steering device which simplifies the structure of an outer ball joint, is not affected by a bending load, and is easy to perform a wheel alignment operation. To this end, the present invention comprises: an inner ball pin (110) having an inner ball (111) coupled to one end thereof and an inner coupling part (110a) formed on the other end thereof, the inner ball pin (110) having a horizontal length; an outer ball pin (120) having an outer coupling part (120a) formed on one end thereof to be coupled to the inner coupling part (110a), and an outer ball (121) coupled to the other end thereof, the outer ball pin (120) having a horizontal length; an inner ball housing (113) which receives the inner ball (111) in a horizontal direction so as to form an inner ball joint and is coupled to a rack bar (300) of a steering gear box in a horizontal state; and an outer ball housing (123) which receives the outer ball (121) in a horizontal direction so as to form an outer ball joint and is coupled to a knuckle coupling part (400) in a horizontal state.

## Description

### [Technical Field]

The present invention relates to a tile rod for transmitting a steering force of a steering wheel to a vehicle wheel in a steering device for a vehicle.

### [Background Art]

A steering device for determining a traveling direction of a vehicle includes a steering wheel provided on a driver's seat, a steering shaft connected to a lower side of the steering wheel, a gearbox connected to the steering shaft in a state in which axes intersect to decelerate a rotational force transmitted from the steering wheel and to simultaneously convert a direction in which a driving force is transmitted, and the like.

In particular, the gearbox has a structure in which an elongated rack bar is installed in a horizontal direction inside a hollow rack housing to convert a steering rotational force transmitted from the steering shaft into a horizontal movement, and both ends of the rack bar are connected to a vehicle via a tie rod.

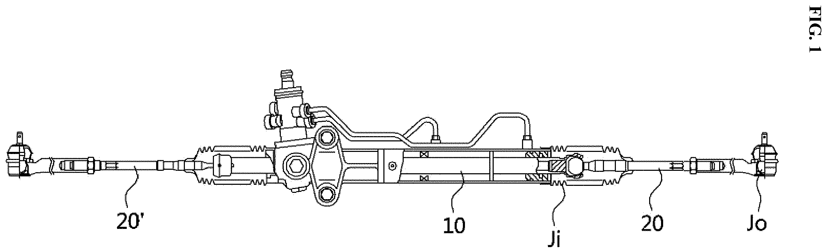

FIG. 1 shows a general configuration of the above-described steering apparatus and shows a state in which tie rods 20 and 20' are installed on both right and left ends of a rack bar 10, respectively. Referring to a structure in which the tie rod 20 is installed, it can be confirmed that one end portion of the tie rod 20 is connected to a distal end portion of the rack bar 10 via an inner ball joint Ji and an outer ball joint Jo, which is coupled with a knuckle coupling part of a steering knuckle arm (not shown) provided to be connected to a wheel of a vehicle wheel, is provided on the other end portion of the tie rod 20.

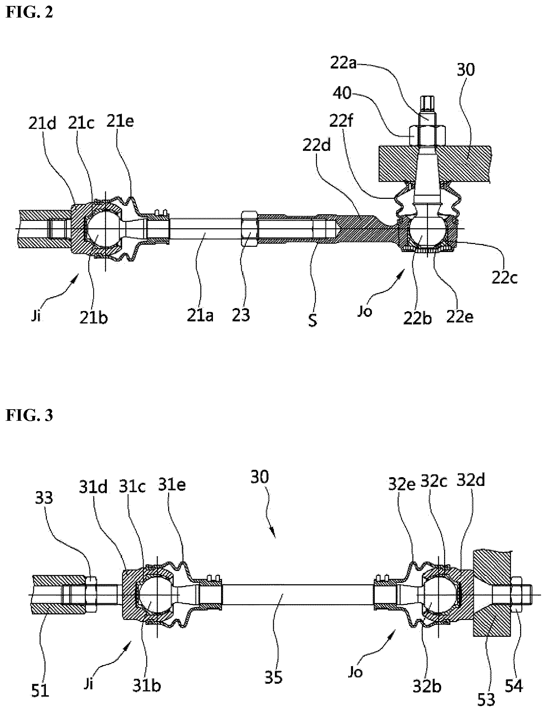

FIG. 2 is a view showing a specific structure of the conventional tie rod 20 including the inner ball joint Ji and the outer ball joint Jo and is a front view as viewed from a front of a vehicle.

The inner ball joint Ji includes a ball 21b provided at one distal end portion of a ball pin 21a, an inner ball seat 21c on which the ball 21b is seated, an inner ball housing 21d configured to accommodate the ball 21b seated on the inner ball seat 21c, and an inner ball boot 21e preventing foreign substances from flowing into the inner ball housing 21d.

The outer ball joint Jo includes a ball stud 22a provided with a ball 22b at one distal end portion thereof, an outer ball seat 22c on which the ball 22b is seated, an outer ball housing 22d configured to accommodate the ball 22b seated on the outer ball seat 22c, a plug 22e, and an outer ball boot 22f preventing foreign substances from flowing into the outer ball housing 22d so that the outer ball joint is connected to a knuckle coupling part 30 of a steering knuckle arm by a nut 40.

In order to enable the outer ball housing 22d of the outer ball joint Jo to be coupled to the ball pin 21a of the inner ball joint Ji, a thread S is formed on a coupling end portion of the ball pin 21a and the outer ball housing 22d, and a nut 23 is fastened in a state in which the above two components are coupled with each other so that the tie rod 20 is completed.

However, the inner ball joint Ji is connected to the rack bar 10 in a horizontal state, whereas, in the outer ball joint Jo, the ball stud 22a is coupled to the outer ball housing 22d in a vertical direction. Due to the above, tensile load and compression load are applied to the ball pin 21a in the inner ball joint Ji, and bending load is applied to the ball stud 22a in the outer ball joint Jo. Particularly, since a direction in which a load is applied is perpendicular to the direction of the ball stud 22a in the outer ball joint Jo, there is a problem that fatigue strength is relatively weak as the bending load is applied to the ball stud 22a.

In addition, since when a vehicle is steered by a manipulation of the steering wheel, the ball stud 22a of the outer ball joint Jo is rotated to cause torsional deformation on the outer ball boot 22f, and since the outer ball boot 22f must be made of a rubber material having excellent durability, the manufacturing cost is increased

Furthermore, since a space occupied by the outer ball joint Jo is large due to the ball stud 22a installed in a vertical direction, a design for avoiding interference between the outer ball joint and a tire is required.

In order to solve such the problem, "Tie Rod of Steering Device for Vehicle" disclosed in Korean Patent Registration No. 10-0910625 has been proposed by the present applicant.

As illustrated in FIG. 3, in the tie rod disclosed in Korean Patent Registration No. 10-0910625, one ball pin 35 having a horizontal length is provided between the inner ball joint Ji and the outer ball joint Jo, and an inner ball 31b and an outer ball 32b are provided on both end portions of the ball pin 35, respectively. Centers of the inner ball 31b and the outer ball 32b are located on a straight line with the central axis parallel to the longitudinal direction of the ball pin 35.

The inner ball 31b and the outer ball 32b are accommodated in an inner ball housing 31d and an outer ball housing 32d, respectively, in the horizontal direction, and the inner ball housing 31d and the outer ball housing 32d are coupled to a rack bar 51 and a knuckle connecting portion 53 of a steering bear box, respectively, in a horizontal state.

A nut 33 is thread-coupled between the inner ball housing 31d and the rack bar 51 to adjust a degree of coupling of the inner ball housing 31d so as to enable a wheel alignment to be performed. A nut 54 is coupled to be thread-coupled and fix between the outer ball housing 32d and the knuckle connecting portion 53.

Reference numerals 31c, 31e, 32c and 32e, which are not yet described, denote an inner ball seat, an inner ball boot, an outer ball seat, and outer ball boot, respectively.

However, according to the structure as described above, it is difficult to simultaneously mold the inner ball housing 31d and the outer ball housing 32d provided at both end portions of the ball pin 35. In addition, it takes a long time to individually mold the inner ball housing 31d and the outer ball housing 32d. Furthermore, there is a problem in that the size of the molding apparatus should be increased in order to mold the inner ball housing 31d and the outer ball housing 32d at both end portions of the entire ball pin 35 in one molding apparatus. In addition, there is a problem in that since a structure for constructing the outer ball joint Jo is complicated and the nut 33 for performing a wheel alignment is provided inside the vehicle, the wheel alignment operation is difficult due to a complicated structure inside the vehicle.

### [Disclosure]

### [Technical Problem]

The present invention has been made in order to solve the above problems, and an object of the present invention is to provide a tie rod of automotive steering device which simplifies a structure of an outer ball joint, in which bending load does not occur, which allows a wheel alignment to be easily conducted, and which is easily manufactured.

### [Technical Solution]

In order to achieve the above objects, a tie rod of automotive steering device according to the present invention includes: an inner ball pin (110) having an inner ball (111) coupled to one end thereof and an inner coupling part (110a) formed at the other end thereof, the inner ball pin (110) having a horizontal length; an outer ball pin (120) having an outer coupling part (120a) formed at one end thereof so as to be coupled to the inner coupling part (110a), and an outer ball (121) coupled to the other end thereof, the outer ball pin (120) having a horizontal length; an inner ball housing (113) configured to accommodate the inner ball (111) in a horizontal direction to form an inner ball joint, the inner ball housing (113) being coupled to a rack bar (300) of a steering gearbox in a horizontal state; and an outer ball housing (123) configured to accommodate the outer ball (121) in the horizontal direction to form an outer ball joint, the outer ball housing (123) being coupled to a knuckle coupling part (400) in a horizontal state.

In this case, the inner coupling part (110a) may have a thread portion formed on an outer circumferential surface thereof and the outer coupling part (120a) may have a coupling groove (120b) formed thereon so that the thread portion of the inner coupling part (110a) is inserted and thread-coupled thereto, and a nut (130) may be provided for fixing a thread-coupling position after the thread-coupling position of the thread portion is adjusted so as to perform a wheel alignment.

A tie rod of automotive steering device according to another spirit of the present invention includes: an inner ball pin (110-1) having an inner ball (111) coupled to one end thereof and an inner coupling part (110-1a) formed at the other end thereof, the inner ball pin (110-1) having a horizontal length; an outer ball pin (120-1) having an outer coupling part (120-1a), which faces the inner coupling part (110-1a), formed at one end thereof and an outer ball (121) coupled to the other end thereof, the outer ball pin (120-1) having a horizontal length; a connecting tube (140-1) configured to connect the inner coupling part (110-1a) and the outer coupling part (120-1a); an inner ball housing (113) configured to accommodate the inner ball (111) in a horizontal direction to form an inner ball joint and coupled to a rack bar (300) of a steering gearbox in a horizontal state; and an outer ball housing (123) configured to accommodate the outer ball (121) in the horizontal direction to form an outer ball joint and coupled to a knuckle coupling part (400) in a horizontal state.

In this case, the connecting tube (140-1) may be a hollow tube with an empty interior, and the inner coupling part (110-1a) and the outer coupling part (120-1a) may be inserted into both end portions of the connecting tube (140-1), respectively, to be thread-coupled to the both end portions.

In addition, the outer ball pin (120-1) may have a stopper (120-1b), which is configured to limit a depth by which the outer coupling part (120-1a) is inserted into the connecting tube (140-1), and a nut (130-1) may be provided for fixing a thread-coupling position after the inner coupling part (110-1a) is inserted into the connecting tube (140-1) and the thread-coupling position is adjusted so as to perform a wheel alignment.

The outer ball housing (123) may be inserted into and thread-coupled to a housing coupling recess (401) formed on one side surface facing the knuckle coupling part (400), and the housing coupling recess (401) may be formed to have a shape in which a side into which the outer ball housing (123) is inserted is open, and an opposite side is closed.

The outer ball housing (123) may include a tapered portion (125 in which a diameter thereof becomes smaller in a direction toward the housing coupling recess (401), and a thread-coupling portion (126) extending from an end portion of the tapered portion (125) in the horizontal direction; the tapered portion (125) may be inserted into a corresponding tapered recess (401a) formed in the housing coupling recess (401) and the thread-coupling portion (126) may be inserted into and thread-coupled to a corresponding thread coupling recess (401b) formed in the housing coupling recess (401); and an outer edge portion of the outer ball housing (123) on which the tapered portion (125) is formed may be in close contact with one side surface of the knuckle coupling part (400) .

The inner ball housing (113) may be integrally formed with a thread-coupling portion (115) inserted into and thread-coupled to a housing coupling groove (301) formed on the rack bar (300), and the thread coupling portion (115) may be inserted into the housing coupling groove (301) to allow the inner ball housing (113) to come into close contact with the rack bar (300).

The inner ball housing (113) may be provided with an inner ball seat (112) on which the inner ball (111) is seated and an inner ball boot (114) configured to prevent a foreign substance from entering the inner ball housing (113), and the outer ball housing (123) may be provided with an outer ball seat (122) on which the outer ball (121) is seated and an outer ball boot (124) configured to prevent a foreign substance from entering the outer ball housing (123).

### [Advantageous Effects]

According to the present invention, it is possible for an operator to conveniently conduct a wheel alignment operation since the wheel alignment operation can be conducted at a coupling portion between two ball pins installed in the horizontal direction.

In addition, since the outer ball joint and the inner ball joint are connected to the rack bar and the knuckle part respectively at both end portions, in the horizontal direction, it is possible to prevent bending load from being applied to the outer ball joint, and since torsion caused by a rotation of the outer ball joint when a vehicle is steered does not occur, the durability of the outer ball boot can be enhanced.

In addition, since it is possible to simultaneously mold the inner ball housing and the outer ball housing in separate molding apparatuses, it is easy to manufacture the ball housings and the time required for the manufacturing process can be shortened.

Furthermore, since a nut employed for coupling the outer ball joint to the knuckle connecting portion is unnecessary, the structure is simplified.

### [Description of Drawings]

FIG. 1 is a view showing a conventional configuration of a steering device.
FIG. 2 is a view showing a structure of a tie rod according to the related art.
FIG. 3 is a view showing a structure of another tie rod according to the related art.
FIG. 4 is a view showing a structure of a tie rod according to one embodiment of the present invention.
FIG. 5 is a view showing a structure of a tie rod according to another embodiment of the present invention.

**[Reference numerals]**

| | |
|---|---|
| 100, 100-1: Tie rod | 110, 110-1: Inner ball pin |
| 110a: Inner coupling part | 111: Inner ball |
| 112: Inner ball seat | 113: Inner ball housing |
| 114: Inner ball boot | 115: Thread-coupling portion |
| 120, 120-1: Outer ball pin | 120-1a: Outer coupling part |
| 120-1b: Stopper | 121: Outer ball |
| 122: Outer ball seat | 123: Outer ball housing |
| 124: Outer ball boot | 125: Tapered portion |
| 126: Thread-coupling portion | 130, 130-1: Nut |
| 140-1: Connecting tube | 140-1a: Internal space |
| 300: Rack bar | 400: Knuckle coupling part |
| 401: Housing coupling recess | 401a: Tapered recess |
| 401b: Thread-coupling recess | |

### [Modes of the Invention]

Hereinafter, a tie rod of a steering device for a vehicle according to the present invention will be described in detail with reference to the accompanying drawings.

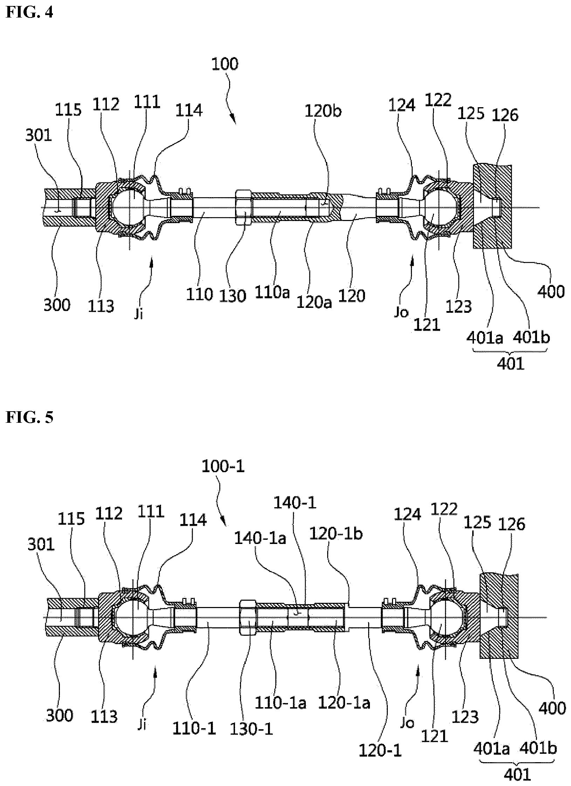

FIG. 4 is a view showing a structure of a tie rod according to one embodiment of the present invention and is a plane view obtained by viewing a vehicle from above.

Referring to FIG. 4, a tie rod 100 includes an inner ball pin 110, an outer ball pin 120, an inner ball housing 113, and an outer ball housing 123.

An inner ball 111 is coupled to one end portion of the inner ball pin 110, an inner coupling part 110a is formed at the other end portion of the inner ball pin 110, and the inner ball pin has a horizontal length. A thread portion provided for thread-coupling is formed on an outer circumferential surface of the inner coupling part 110a.

The inner ball 111 is accommodated in an accommodating recess of the inner ball housing 113 to form an inner ball joint Ji. In this case, the accommodating recess of the inner ball housing 113 is formed to be open laterally toward the inner ball 111. Therefore, the inner ball housing 113 accommodates the inner ball 111 in the horizontal direction.

On a side surface of the inner ball housing 113 opposite to the accommodating recess, a thread-coupling portion 115 having a thread portion formed on an outer circumferential surface thereof protrudes laterally to be integrally formed. The thread-coupling portion 115 is inserted into and coupled to a housing coupling groove 301 formed in a rack bar 300 of a steering gearbox. The housing coupling groove 301 is formed to have a horizontal length, and a thread portion provided for thread-coupling is formed on an inner circumferential surface thereof.

Accordingly, when the thread-coupling portion 115 is inserted into and thread-coupled to the housing coupling groove 301, the inner ball housing 113 is coupled to the rack bar 300 in a horizontal state. In this case, the inner ball housing 113 comes into close contact with the rack bar 300.

An inner ball seat 112 on which the inner ball 111 is seated is provided inside the inner ball housing 113, and in order to prevent foreign substances from entering the inner ball housing 113, an inner ball boot 114 is provided across a range from an outer circumferential portion of the inner ball pin 110 to the inner ball housing 113.

In the outer ball pin 120, an outer coupling part 120a is formed for one end portion thereof to be coupled to the inner coupling part 110a and an outer ball 121 is formed at the other portion end thereof. Here, the outer ball pin 121 has a horizontal length.

A coupling groove 120b having a predetermined depth is formed on the outer coupling part 120a from one end portion of the outer ball pin 120 in the horizontal direction to allow the inner coupling part 110a to be inserted therein, and a thread portion is formed on an inner circumferential surface of the outer coupling part 120a so as to be thread-coupled with the outer circumferential surface of the inner coupling part 110a.

Insertion depth of the inner coupling part 110a with respect to the outer coupling part 120a is adjusted to adjust a thread-coupling position, and by fixing the outer coupling part using a nut 130 coupled to the outer circumferential surface of the inner coupling part 110a, a wheel alignment may be accomplished.

Since the inner ball pin 110 and the outer ball pin 120 are separated from each other and the wheel alignment may be accomplished using the nut 130 on the inner coupling part 110a and the outer coupling part 120a, as compared with the conventional technique described in FIG. 3, the wheel alignment operation may be performed at a position near an external side of the vehicle so that an operator can perform the wheel alignment operation conveniently.

The outer ball 121 is accommodated in an accommodating recess of the outer ball housing 123 to form an outer ball joint Jo. In this case, the accommodating recess of the outer ball housing 123 is formed to be open laterally toward the outer ball 121. Accordingly, the outer ball housing 123 accommodates the outer ball 121 in the horizontal direction.

On the outer ball housing 123, a tapered portion 125 and a thread-coupling portion 126 protruding laterally are integrally formed on a surface to face the accommodating recess. In addition, a housing coupling recess 401, which is composed of a tapered recess 401a having a shape corresponding to the tapered portion 125 and a thread-coupling recess 401b having a shape corresponding to the thread-coupling portion 126, is formed on a knuckle coupling part 400. The housing coupling recess 401 is formed to have a shape in which a side where the outer ball housing 123 is inserted is open and a side opposite to the above side is closed.

The tapered portion 125 is formed to have a diameter becomes smaller in a direction toward the housing coupling recess 401, and the thread-coupling portion 126 extends from a lateral end portion of the tapered portion 125 in the horizontal direction and has a thread formed on an outer circumferential surface thereof.

When the thread-coupling portion 126 is thread-coupled to the thread-coupling recess 401b and the tapered portion 125 is inserted into the tapered recess 401a, an outer edge portion of the outer ball housing 123 on which the tapered portion 125 is formed is pressed against one side surface of the knuckle coupling part 400.

An outer ball seat 122 on which the outer ball 121 is seated is provided inside the outer ball housing 123, and in order to prevent foreign substances from entering the outer ball housing 123, an outer ball boot 124 is provided across a range from an outer circumferential portion of the outer ball pin 120 to the outer ball housing 123.

When the above-described configurations are coupled with each other, centers of the inner ball 111 and the outer ball 121 are located on a straight line together with a central axis line parallel to a longitudinal direction of the inner ball pin 110 and the outer ball pin 120.

Therefore, since the configuration installed in a vertical direction, such as the ball stud 22a illustrated in FIG. 2, is eliminated, the outer ball joint Jo is not subjected to bending load in a perpendicular direction and no deformation caused by torsion also occurs in the outer ball boot 124. Further, since a space occupied by the outer ball joint Jo is small, a design for avoiding interference between the outer ball joint and a tire is facilitated.

In addition, since the inner ball pin 110 and the outer ball pin 120 are separated from each other, it is possible to separately manufacture the inner ball joint Ji and the outer ball joint Jo. Accordingly, a size of molding apparatus employed for molding the inner ball pin 110 and the outer ball pin 120 can be reduced, and a molding operation is facilitated. Since it is possible to simultaneously manufacture the inner ball joint Ji and the outer ball joint Jo, the manufacturing time can be shortened.

In addition, the tie rod illustrated in FIG. 3 according to a convention technology has the structure in which the outer ball joint is coupled to the knuckle coupling part 53 using the nut 54, whereas the present invention does not require a separate nut for connecting the outer ball joint Jo to the knuckle coupling part 400 so that a structure is simplified and a coupling operation is facilitated.

On the knuckle coupling part 400, in addition, there is no protruding portion on an side surface (in FIG. 4, a right side surface of the knuckle coupling part 400) opposite to the side surface on which the housing coupling recess 401 is formed so that it is possible to prevent interference of the knuckle coupling part 400 with a component located at a right side of the knuckle coupling part 400 from occurring and a design for components located at a right side of the knuckle coupling part 400 can be facilitated.

Furthermore, since an outer edge portion of the outer ball housing 123, in which the tapered portion 125 is formed, is pressed against one side of the knuckle coupling part 400, when the outer ball pin 120 is rotated to be thread-coupled, an edge portion of the outer ball housing 123 is pressed against the knuckle coupling part portion 400, and then a thread-coupling corresponding only to a necessary coupling force can be made.

FIG. 5 is a view showing a structure of a tie rod according to another embodiment of the present invention and is a plane view obtained by viewing a vehicle from above.

A tie rod 100-1 of the embodiment shown in FIG. 5 differs from that in the embodiment of FIG. 4 only in that an inner ball pin 110-1 is connected to an outer ball pin 120-1 by a connecting tube 140-1, and the inner ball joint Ji and the outer ball joint Jo have the same configuration as those in the embodiment of FIG. 4.

In other words, the inner ball joint Ji is provided with the inner ball 111, the inner ball seat 112, the inner ball housing 113, the inner ball boot 114, and the thread-coupling portion 115. The outer ball joint Jo is provided with the outer ball 121, the outer ball seat 122, the outer ball housing 123, the outer ball boot 124, the tapered portion 125, and the thread-coupling portion 126. On the knuckle coupling part 400, the housing coupling recess 401 composed of the tapered recess 401a and the thread-coupling recess 401b is formed.

The inner coupling part 110-1a formed at one side of the inner ball pin 110-1 has a thread portion formed on the outer circumferential surface thereof, and the outer coupling part 120-1a of the outer ball pin 120-1 opposite to the inner ball pin 110-1 also has a thread portion formed on the outer circumferential surface thereof.

The connecting tube 140-1 may be formed of a hollow tube and has a thread portion formed on an inner surface of an internal space 140-1a thereof.

The inner coupling part 110-1a of the inner ball pin 110-1 is inserted into one side of the connecting tube 140-1 to be thread-coupled inside the connecting tube 140-1, and the outer coupling part 120-1a of the outer ball pin 120-1 is inserted into the other side of the connecting tube 140-1 to be thread-coupled inside the connecting tube 140-1.

On the outer ball pin 120-1, a stopper 120-1b configured to limit a depth by which the outer coupling part 120-1a is inserted into the connecting tube 140-1 is formed and protrudes along the outer circumferential surface thereof.

In order to couple the inner ball pin 110-1, the outer ball pin 120-1 and the connecting tube 140-1 configured as above, in a state in which the outer coupling part 120-1a is inserted into and thread-coupled with the connecting tube 140-1 to allow one end portion of the connecting tube 140-1 to come into contact with the stopper 120-1b, when the inner coupling part 110-1a is inserted into and thread-coupled with the connecting tube 140-1, an insertion depth of the inner coupling part 110-1a is adjusted, and the inner coupling part 110-1a is then fixed by using a nut 130-1 coupled to the outer circumferential surface thereof so that a wheel alignment can be made.

According to the above configuration, the centers of the inner ball 111, the inner ball pin 110-1, the outer ball pin 120-1, and the outer ball 121 are located on a straight line in the horizontal direction. Therefore, this embodiment can have all of the effects obtained in the embodiment shown in FIG. 4 equally.

Although the present invention has been described in detail with respect to preferred embodiments thereof as described above, the present invention is not limited to the above-described embodiments, and it is possible to implement various modifications of the invention within the scope of the claims, the detailed description of the invention, and the accompanying drawings, and these modifications also belong to the present invention.

## Claims

1. A tie rod of automotive steering device , comprising:
an inner ball pin (110) having an inner ball (111) coupled to one end thereof and an inner coupling part (110a) formed at the other end thereof, the inner ball pin (110) having a horizontal length;
an outer ball pin (120) having an outer coupling part (120a) formed at one end thereof so as to be coupled to the inner coupling part (110a), and an outer ball (121) coupled to the other end thereof, the outer ball pin (120) having a horizontal length;
an inner ball housing (113) configured to accommodate the inner ball (111) in a horizontal direction to form an inner ball joint, the inner ball housing (113) being coupled to a rack bar (300) of a steering gearbox in a horizontal state; and
an outer ball housing (123) configured to accommodate the outer ball (121) in the horizontal direction to form an outer ball joint, the outer ball housing (123) being coupled to a knuckle coupling part (400) in a horizontal state.

2. The tie rod of a automotive steering device of claim 1, wherein the inner coupling part (110a) has a thread portion formed on an outer circumferential surface thereof and the outer coupling part (120a) has a coupling groove (120b) formed thereon so that the thread portion of the inner coupling part (110a) is inserted and thread-coupled thereto, and
a nut (130) is provided for fixing a thread-coupling position after the thread-coupling position of the thread portion is adjusted so as to perform a wheel alignment.

3. A tie rod of automotive steering device, comprising:
an inner ball pin (110-1) having an inner ball (111) coupled to one end thereof and an inner coupling part (110-1a) formed at the other end thereof, the inner ball pin (110-1) having a horizontal length;
an outer ball pin (120-1) having an outer coupling part (120-1a), which faces the inner coupling part (110-1a), formed at one end thereof and an outer ball (121) coupled to the other end thereof, the outer ball pin (120-1) having a horizontal length;
a connecting tube (140-1) configured to connect the inner coupling part (110-1a) and the outer coupling part (120-1a);
an inner ball housing (113) configured to accommodate the inner ball (111) in a horizontal direction to form an inner ball joint and coupled to a rack bar (300) of a steering gearbox in a horizontal state; and
an outer ball housing (123) configured to accommodate the outer ball (121) in the horizontal direction to form an outer ball joint and coupled to a knuckle coupling part (400) in a horizontal state.

4. The tie rod of automotive steering device of claim 3, wherein the connecting tube (140-1) is a hollow tube with an empty interior, and the inner coupling part (110-1a) and the outer coupling part (120-1a) are inserted into both ends of the connecting tube (140-1), respectively, to be thread-coupled to each other.

5. The tie rod of automotive steering device of claim 4, wherein the outer ball pin (120-1) has a stopper (120-1b), which is configured to limit a depth by which the outer coupling part (120-1a) is inserted into the connecting tube (140-1), and a nut (130-1) is provided for fixing a thread-coupling position after the inner coupling part (110-1a) is inserted into the connecting tube (140-1) and the thread-coupling position is adjusted so as to perform a wheel alignment.

6. The tie rod of automotive steering device of claim 1 or claim 3, wherein the outer ball housing (123) is inserted into and thread-coupled to a housing coupling recess (401) formed on one side surface facing the knuckle coupling part (400), and the housing coupling recess (401) is formed to have a shape in which a side into which the outer ball housing (123) is inserted is open, and an opposite side is closed.

7. The tie rod of automotive steering device of claim 6, wherein: the outer ball housing (123) includes a tapered portion (125) in which a diameter thereof becomes smaller in a direction toward the housing coupling recess (401), and a thread-coupling portion (126) extending from an end portion of the tapered portion (125) in the horizontal direction;
the tapered portion (125) is inserted into a corresponding tapered recess (401a) formed in the housing coupling recess (401) and the thread-coupling portion (126) is inserted into and thread-coupled to a corresponding thread coupling recess (401b) formed in the housing coupling recess (401); and
an outer edge portion of the outer ball housing (123) on which the tapered portion (125) is formed is in close contact with one side surface of the knuckle coupling part (400).

8. The tie rod of automotive steering device of claim 2 or claim 5, wherein the inner ball housing (113) is integrally formed with a thread-coupling portion (115) inserted into and thread-coupled to a housing coupling groove (301) formed on the rack bar (300), and the thread coupling portion (115) is inserted into the housing coupling groove (301) to allow the inner ball housing (113) to come into close contact with the rack bar (300).

9. The tie rod of automotive steering device of claim 1 or claim 3, wherein the inner ball housing (113) is provided with an inner ball seat (112) on which the inner ball (111) is seated and an inner ball boot (114) configured to prevent a foreign substance from entering the inner ball housing (113), and the outer ball housing (123) is provided with an outer ball seat (122) on which the outer ball (121) is seated and an outer ball boot (124) configured to prevent a foreign substance from entering the outer ball housing (123).
